# FASCICULE DE BREVET EUROPEEN

(11) **EP 2 233 238 B1**
(45) Date de publication et mention de la délivrance du brevet: **08.05.2013**
(21) Numéro de dépôt: 10002141.9
(22) Date de dépôt: 03.03.2010
(51) Int. Cl.: B23K 20/12, B23K 37/04

(54) **Méthode de soudage par friction entre des pièces métalliques, procurant un contrôle de la température de soudage à partir d'une feuille unique thermiquement conductrice**
Verfahren zum Reibrührsschweissen von metallischen Teilen, unter Verwendung einer eizigen thermisch leitenden Folie
Method of friction stir welding between metallic workpieces, with control of welding temperature using a unique thermally conductive sheet

(30) Priorité: 26.03.2009 FR 0901427
(43) Date de publication de la demande: 29.09.2010
(73) Titulaire: EUROCOPTER, 13725 Marignane Cédex (FR)
(72) Inventeur: Allehaux, Delphine, 13880 Velaux (FR); Gatti, Jean-Loup, 13007 Marseille (FR)
(74) Mandataire: Pouillot, Laurent Pierre Paul

(56) Documents cités:
- EP-A- 1 920 868
- JP-A- 2001 001 059
- US-A- 5 493 097
- US-A1- 2007 064 403
- US-B1- 6 360 937

## Description

L'invention est du domaine des techniques de soudage par friction entre deux pièces métalliques planes ou de forme, comprenant une opération de contrôle de la température pendant l'opération de soudage. Elle a pour objet une méthode de soudage par friction entre deux pièces à assembler conformément au préambule de la revendication 1 (voir, par exemple, US 6 360 937 B1), et plus particulièrement une technique de contrôle de la température au cours de l'opération de soudage.

On connaît parmi les techniques de soudage celles qui sont effectuées par friction, telles que dite FSW (Friction Stir Welding en anglais). Une telle technique est avantageuse pour l'assemblage l'une à l'autre de pièces métalliques planes ou de forme à assembler, telles que des plaques, des tôles ou autres pièces analogues. Les pièces à assembler sont maintenues plaquées en adjacence sur une enclume, par bridage ou autre technique analogue notamment. On comprendra par enclume tout organe susceptible de former une table de travail ou organe analogue, sur laquelle sont fixées par bridage les pièces de sorte qu'elles se trouvent plaquées contre l'enclume, directement ou indirectement. Par analogie dans le cas d'un soudage entre pièces de forme, l'enclume est susceptible d'être de conformation complémentaire au profil des pièces à assembler, pour autoriser un tel plaquage. Les pièces sont maintenues par serrage contre l'enclume au moyen des brides, en étant disposées bord à bord pour la formation du cordon de soudure dans la zone d'adjacence de ces bords, correspondante à une zone de soudure. La mise bord à bord des pièces est susceptible de résulter d'une mise en contact des tranches correspondantes des pièces l'une contre l'autre, ou d'une mise en chevauchement de l'un des bords d'une pièce sur le bord de l'autre pièce, qui comporte notamment une feuillure ou analogue à cet effet. Un mandrin comporte un épaulement et un pion de soudage muni d'un reliez agrippant, qui est ménagé à son extrémité libre opposée à son extrémité en prise sur le mandrin. Ce relief agrippant est par exemple agencé en filet, ou encore résulte d'une section de conformation polygonale de l'extrémité libre du pion de soudage. Une mise en contact puis un déplacement relatif entre le pion de soudage et les bords adjacents des pièces permettent d'obtenir la formation du cordon de soudure, et en conséquence l'assemblage des pièces l'une à l'autre. L'obtention du cordon de soudure résulte d'un échauffement des pièces sous l'effet de la friction opérée localement sur elles par le pion de soudage dans la zone de soudure. En outre, l'épaulement présente un état de surface qui participe par friction à l'échauffement des pièces à souder. Plus particulièrement, les frictions du pion de soudage et de l'épaulement provoquent un échauffement de la matière dont sont issues les pièces, jusqu'à l'obtention d'un état pâteux souhaité de cette matière qui se mélange de l'une à l'autre des pièces. La jointure entre les pièces est ensuite obtenue par recristallisation dynamique continue de la matière dans la zone de soudure.

Un problème posé réside dans le contrôle rigoureux de la température à laquelle sont soumises les pièces pendant l'opération de soudage. Il est nécessaire d'atteindre un seuil déterminé de température de soudage pour l'obtention du cordon de soudure, sans pour autant induire une déformation des pièces assemblées l'une à l'autre. Ce problème est d'autant plus difficile à résoudre pour le soudage de pièces de faible épaisseur, à titre indicatif d'une épaisseur de l'ordre du millimètre voire du millimètre et demi, et/ou pour des pièces métalliques issues d'un matériau de faible conductivité thermique. Dans un tel cas, la soudure par friction induit une exothermie localisée et très rapide en raison du frottement du pion de soudage contre les pièces. Cette exothermie est d'autant plus significative dans le cas d'un travail en force du mandrin, dont l'épaulement constitue une jauge de profondeur en étant maintenu en contact contre les pièces. Une telle élévation de température localisée et rapide est susceptible d'atteindre la température de fusion du matériau dont sont issues les pièces, avec pour conséquence de ne pas obtenir l'état pâteux souhaité, et plus particulièrement de ne pas obtenir un épanchement visqueux stable de la matière constitutive des pièces nécessaire à l'étape de recristallisation. Il en ressort qu'une difficulté à surmonter réside dans l'obtention d'une thermorégulation du matériau dont les pièces sont issues dans la zone de soudure, notamment pour des pièces métalliques de faible épaisseur qui de surcroît sont susceptibles d'être issues d'un matériau à faible conductivité thermique, voire de matériaux respectifs différents. Cette thermorégulation est d'autant plus délicate à obtenir dans le cas d'un travail en force du pion de soudage, avec une mise en application de l'épaulement que comporte le mandrin contre les pièces à assembler.

Il est traditionnel dans le domaine d'opérer une étape transitoire pour évaluer les caractéristiques dynamiques idoines du pion de soudage préalablement à l'opération de soudure. Ces caractéristiques portent notamment sur la vitesse de rotation du mandrin et sur la vitesse de déplacement relatif en translation entre le pion de soudage et les pièces, le long de la zone de soudure. Cette étape transitoire consiste à placer les pièces à souder sur l'enclume, puis à réaliser une amorce de cordon de soudure sur une distance requise, de l'ordre jusqu'à une trentaine de centimètres, pour définir au mieux des gammes de vitesses de rotation du mandrin et du dit déplacement relatif en translation. Lorsque les conditions du soudage obtenues sont satisfaisantes, la modélisation de ces caractéristiques dynamiques est définie pour des conditions de soudage déterminées, telles qu'au regard de l'épaisseur des pièces à assembler, du matériau dont elles sont issues, des caractéristiques propres au pion de soudage, et/ou de l'environnement de la zone de soudure. Cependant, dans le cas de pièces de faible épaisseur et/ou de faible conductivité thermique, voire de conductivité thermique respective, la phase transitoire n'est pas suffisante pour définir de manière fiable et satisfaisantes les modalités nécessaires à l'obtention d'un épanchement visqueux stable de la matière dans la zone de soudure. En outre, cette étape transitoire est susceptible d'être inopérante dans le cas ou les pièces à assembler sont d'épaisseurs respectives variables le long du cordon de soudure à former. Une réduction des vitesses de rotation et du dit déplacement relatif en translation deviennent nécessaires, avec pour conséquence de porter atteinte à la productivité de l'opération de soudage.

Les techniques de soudage par friction qui sont opérées sur des pièces de faible épaisseur et/ou de faible conductivité thermique, nécessitent un pilotage rigoureux du pion de soudage. De manière courante pour l'assemblage entre elles de pièces métalliques planes, il est préféré que le pion de soudage travaille en situation d'effort optimisé, pour accroître l'échauffement des pièces à assembler. Cependant, de telles conditions de travail ne sont pas adaptées pour des pièces de faible épaisseur et/ou de faible conductivité thermique, en raison d'un risque d'effondrement du cordon de soudure en cours de soudage. En outre, si les modalités d'utilisation du pion de soudage en effort peuvent être satisfaisantes au regard de la productivité et/ou du bénéfice apporté par l'épaulement à fonction de jauge de profondeur, elles induisent un risque accru de rupture du pion de soudage et une tendance au collage des pièces à l'enclume, ce qui est à éviter. Il en ressort que pour des pièces de faible épaisseur et/ou de faible conductivité thermique, il est finalement préférable d'effectuer l'opération de soudage avec un pilotage en position du pion de soudage, c'est-à-dire avec un mandrin exempt d'épaulement qui tend à provoquer une montée en température trop importante lors de la formation du cordon de soudure.

Il en ressort une nécessité dans le domaine d'avoir à concilier des cadences de production élevées avec un contrôle rigoureux de l'échauffement des pièces, pour l'obtention d'un cordon de soudure présentant des caractéristiques de recristallisation, et donc de qualités mécaniques, satisfaisantes.

Il a par exemple été proposé par le document EP1048390 (FOKKER AEROSTRUCTURES) une méthode de soudage par friction consistant à optimiser la concentration de chaleur dans la zone de soudure. Pour influer sur la répartition de la chaleur produite par la friction, et obtenir une telle concentration de chaleur dans la zone de soudure, il est proposé d'interposer entre les brides et les pièces à assembler des traverses massives d'un coefficient de conductivité thermique analogue à celui des pièces à assembler. Un élément en matériau thermiquement isolant est interposé entre les pièces à assembler et l'enclume, et le pion de soudage travaille à l'effort pour optimiser la production de chaleur. La chaleur produite est typiquement concentrée dans la zone de contact immédiate entre le pion de soudage et les pièces à assembler, en évitant sa dispersion. La capacité de concentration de chaleur obtenue dans la zone de soudage permet d'accroître considérablement les vitesses de production avec un minimum d'énergie consommée. Une telle solution de gain de productivité n'est cependant pas envisageable pour des pièces de faible épaisseur, en raison des risques susvisés liés à l'exothermie localisée et rapide induite.

Il a aussi par exemple été proposé par US7121448 (PAZHAYANNUR RAMANATHAN SUBRAMANIAN et al.), d'interposer entre les pièces et l'enclume, dans la zone de soudage en chevauchement de l'une et l'autre des pièces, un élément chauffant formé d'une plaque étendue le long du cordon de soudure à former. L'élément chauffant est intégré à un châssis, ce châssis et la face de soutien des pièces par l'enclume affleurant. Le châssis comprend en outre des moyens de refroidissement, notamment formé de conduits véhiculant un liquide caloporteur. Ces moyens de refroidissement permettent de contrôler la température de chauffe de l'élément chauffant, dont l'élévation contrôlée en température permet d'éviter des zones localisées d'exothermie autour de la zone de soudure, et finalement de préserver les pièces de déformations.

On note que le document US 5 493 097 prévoit une méthode de soudure ne mettant pas en oeuvre une soudure par friction, et utilisant un orifice en regard des faces inférieures des pièces à souder remplis par une poudre favorisant la soudure.

De plus, le document US6360937 B1 présente une méthode de soudure par friction de deux pièces à assembler munies de brides en cuivre.

Le but de la présente invention est de proposer une méthode de soudage par friction entre des pièces métalliques planes placées en adjacence, et plus particulièrement une technique de contrôle de la température en cours de l'opération de soudage. La présente invention a aussi pour but de proposer un outillage pour la mise en oeuvre d'une telle méthode, destiné à équiper une machine à souder par friction.

Il est plus particulièrement visé par la présente invention de proposer une telle méthode adaptée au soudage de pièces métalliques de faible épaisseur, de l'ordre inférieure à 1,5 millimètre, qui sont susceptibles d'être de même épaisseur ou d'épaisseurs respectives différentes, voire d'être d'épaisseur variable le long du cordon de soudure à former, et/ou qui sont susceptibles d'être issues d'un même matériau ou de matériaux respectifs différents, et/ou encore qui sont susceptibles d'être issues de matériaux de faible conductivité thermique.

Il est encore plus particulièrement visé par la présente invention de proposer une telle méthode qui permette d'optimiser les cadences de production tout en obtenant une recristallisation satisfaisante du cordon de soudure formé, et donc des caractéristiques mécaniques performantes de l'assemblage obtenu entre les pièces, notamment au regard de la fiabilité, de la robustesse et de l'état de surface. Il est spécifiquement aussi recherché l'obtention d'une thermorégulation de l'opération de soudage sur des longueurs importantes, notamment à partir d'un contrôle d'éventuelles zones localisées de surchauffe, en évitant des déformations localisées du cordon de soudure obtenu et/ou des pièces, qui sont susceptibles d'être provoquées par les contraintes thermiques induites par l'opération de soudage.

II est aussi plus particulièrement visé par la présente invention de proposer une telle méthode qui permette l'obtention du cordon de soudure recherché à partir d'une machine de production structurellement simple, et notamment ne nécessitant pas l'utilisation d'un outillage complexe et coûteux, ni une mise en oeuvre restrictive au regard du type de différentes pièces métalliques de faible épaisseur à assembler, ni encore une procédure de préparation de l'opération de soudage qui soit complexe et longue à effectuer, ni encore une procédure de contrôle de la qualité de l'assemblage des pièces obtenu qui soit complexe, aléatoire et/ou invasive.

Il est de surcroît visé par la présente invention de proposer une telle méthode qui évite, voire qui interdit, le collage des pièces à assembler sur l'enclume, ou tout organe analogue susceptible de former une table de travail.

Il est de plus visé par la présente invention de proposer une telle méthode qui permette éventuellement, de manière simple, d'offrir une protection du cordon de soudure obtenu, pendant notamment des périodes de stockage et/ou de transport des pièces en attente d'utilisation.

La présente invention relève d'une méthode de soudage par friction entre deux pièces assembler telle que définie dans la revendication 1. et/ou de régulation de la température.

La méthode de la présente invention comprend les opérations consistant à :
- plaquer individuellement en adjacence les pièces à assembler contre une enclume. Ce plaquage est notamment réalisé au moyen d'au moins un jeu de brides, qui appliquent individuellement un appui contre l'une ou l'autre des grandes faces des pièces, dite supérieures, de sorte que les pièces prennent un appui antagoniste contre une face de soutien de l'enclume à leur grande face opposée, dite inférieure. La mise en adjacence des pièces correspond par exemple à une mise en contact des tranches correspondantes des pièces l'une contre l'autre, ou encore par une mise en chevauchement des bords des pièces l'un sur l'autre, l'une des pièces étant plus épaisse que l'autre et comportant une feuillure de réception du bord correspondant de l'autre pièce.
- mettre en rotation un mandrin muni d'un pion de soudage et d'un épaulement. Cet épaulement est à fonctions avantageuses d'amélioration de l'état de surface du cordon de soudure obtenu, et de jauge de profondeur. Un tel épaulement provoque une friction accrue entre les pièces et l'outillage associant le pion de soudage et le mandrin, avec pour conséquence d'avoir à contrôler et réguler un risque d'exothermie localisée rapide et importante dans la zone de soudure au cours de l'opération de soudage. La conformation de l'extrémité libre du pion de soudage est susceptible d'être quelconque, dès lors qu'elle procure l'effet de friction recherché contre les pièces.
- provoquer un déplacement relatif entre le mandrin et l'enclume, pour amener le pion de soudage vers les grandes faces supérieures des pièces à assembler. Ce déplacement relatif est susceptible d'être indifféremment obtenu à partir d'un déplacement en translation du mandrin et/ou de l'enclume. Ce déplacement est notamment effectué suivant une direction verticale orthogonale au plan formé par la face de soutien de l'enclume, ce plan étant notamment orienté horizontalement au regard de l'axe vertical de gravité.
- appliquer le pion de soudage conjointement à travers les dits bords adjacents des pièces, pour provoquer un échauffement par friction de la matière des pièces dans la zone de soudure. Cette application est effectuée jusqu'à induire un épanchement et un mélange de cette matière d'une pièce à l'autre pour la formation d'une zone localisée de soudure. L'amorce du cordon de soudure est susceptible d'être suivie d'une étape transitoire de formation d'un cordon de soudure transitoire.
- Provoquer un déplacement relatif en translation entre le mandrin et l'enclume suivant au moins une direction correspondante à l'extension des bords adjacents des pièces à assembler, jusqu'à obtention du cordon de soudure. L'extension des bords adjacents des pièces, et en corollaire l'extension du cordon de soudure, est susceptible d'être indifféremment rectiligne ou à changement de directions, notamment dans le plan formé par la face de soutien de l'enclume.
- Induire une recristallisation de la matière formant le cordon de soudure par refroidissement des pièces indifféremment à l'air ambiant ou techniquement assistée. Le cordon de soudure est notamment formé d'un mélange de la matière issue de l'une et l'autre des pièces, en conséquence de l'épanchement de cette matière mise à l'état pâteux lors de l'opération de soudage. Plus particulièrement, le refroidissement des pièces, et plus particulièrement du cordon de soudure obtenu, est de préférence réalisé à l'air ambiant. Il est cependant envisageable de contrôler la recristallisation du cordon de soudure par des moyens techniques d'assistance à cette recristallisation, tels que des moyens de thermorégulation mettant par exemple en oeuvre un fluide caloporteur, un flux d'air ou autre technique analogue.

La méthode de la présente invention est principalement reconnaissable en ce qu'elle comprend l'opération consistant à maintenir plaquée une feuille principale martyre contre le cordon de soudure et en chevauchement contre la face inférieure de l'une et l'autre des pièces, cette feuille principale étant issue d'un matériau à forte conductivité thermique. Cette feuille principale est apte à prélever par conduction la chaleur induite par la friction du mandrin contre les pièces, et à dissiper cette chaleur par conduction et par rayonnement. La friction du mandrin contre les pièces est notamment provoquée par la mise en application en force du pion de soudage et de l'épaulement contre les pièces.

A contrario des habitudes dans le domaine, la méthode de la présente invention propose de capter la chaleur induite par la friction entre le pion de soudage et les pièces, et à évacuer au mieux cette chaleur captée afin de palier à un éventuel surcroît de température et/ou une surchauffe temporaire, et éviter en conséquence une exothermie localisée importante et rapide dans la zone de soudure. L'utilisation d'une feuille principale issue d'un matériau à forte conductivité qui est directement plaquée contre les pièces, au moins à proximité de la zone de soudure et en chevauchement de l'une et l'autre des pièces à assembler, procure de manière satisfaisante une telle évacuation de chaleur sans pour autant complexifier la mise en oeuvre de la méthode visant à obtenir l'assemblage entre les pièces. L'utilisation d'une telle feuille principale est particulièrement adaptée dans le cadre des applications données de la méthode proposée par la présente invention, prise isolément ou en combinaison.

L'évacuation de chaleur que procure la feuille principale permet d'éviter une exothermie localisée, rapide et trop importante dans la zone de soudure lors du déplacement relatif en translation entre le pion de soudage et l'enclume. Le contrôle et la régulation obtenus de la température induite par l'opération de soudure permet d'augmenter les vitesses de production, tout en limitant une telle exothermie pour éviter les conséquences susvisées susceptibles d'être induites. Une variation significative de température lors de l'opération de soudage, susceptible d'être induite par une éventuelle variation d'épaisseur des pièces, est évitée. Dans le cas où les pièces sont issues de matériaux respectifs différents et/ou à faible conductivité thermique, la feuille principale permet néanmoins d'évacuer de manière constante et satisfaisante la température induite lors de l'opération de soudage. Les qualités de forte conductivité de la feuille principale procure une dissipation naturelle à l'air ambiant de la chaleur induite lors de l'opération de soudage.

Il est cependant envisageable d'associer à la forte conductivité de la feuille principale, des moyens supplémentaires pour son refroidissement, qui sont mis en oeuvre lors de l'opération de soudage soit de manière continue, soit de manière discontinue à partir d'informations fournies par des capteurs de température ou analogues en relation avec la feuille principale et/ou avec la zone localisée de soudure. De tels moyens de refroidissement sont susceptibles d'être simplement issus d'un flux d'air ventilant la feuille principale, ou encore d'être issus d'un échangeur de chaleur à fluide caloporteur véhiculant des frigories, qui est apte à être logé dans l'enclume.

Selon une variante de réalisation, il est de plus proposé d'affecter à chacune des pièces au moins une feuille secondaire issue d'un matériau à forte conductivité thermique de type cuivre par exemple, et à maintenir chaque feuille secondaire plaquée contre la face supérieure de la pièce à laquelle elle est affectée. La feuille secondaire est placée au plus proche de la zone de soudure, pour optimiser le captage de la chaleur induite par le frottement du pion de soudage contre les pièces. Les feuilles secondaires sont notamment interposées entre au moins une bride et la pièce correspondante. Cette bride est susceptible d'être une bride spécifique dédiée à la feuille, et/ou d'être une bride primitivement dédiée au maintien de la pièce correspondante contre l'enclume.

Indépendamment de la variante, il est proposé de maintenir plaquée en chevauchement une feuille principale unique martyre contre la face inférieure de l'une et l'autre des pièces à assembler.

Selon une réalisation, la feuille principale est disposée contre les faces inférieures des pièces à assembler, par exemple entre une enclume et lesdites faces inférieures. Avantageusement, la feuille principale est un feuillard ayant une épaisseur de l'ordre de un dixième de l'épaisseur des pièces à assembler. De plus, la feuille principale a éventuellement une largeur de l'ordre de vingt millimètre pour couvrir le cordon de soudure et une longueur au moins égale à la longueur des pièces à assembler.

Selon une autre réalisation, il est éventuellement proposé de placer en position ladite feuille principale dans un logement que comporte l'enclume et qui débouche à sa face de soutien. Ce logement est d'une profondeur adaptée à l'épaisseur de la feuille principale, en étant par exemple ménagé dans un châssis interchangeable que reçoit l'enclume, ou d'être d'une profondeur unique en exploitant un jeu de cales pour le positionnement de la feuille principale par rapport à la face de soutien de l'enclume. La feuille principale est positionnée à l'intérieur du logement en faisant sensiblement affleurer la feuille principale et la face de soutien de l'enclume. Cet affleurement est susceptible d'être rigoureux, ou d'être légèrement rehaussé en ce qui concerne la feuille principale pour garantir son plaquage contre les pièces par tassement sans porter atteinte au plaquage des pièces contre l'enclume.

L'exploitation de cette feuille principale unique présente plusieurs avantages.

Un premier avantage réside dans le fait que sa mise en place à l'intérieur du logement est simple et aisée à réaliser, au regard de son positionnement par rapport au cordon de soudure à réaliser.

En outre, quel que soit le mode réalisation, la feuille principale permet de préserver l'enclume lors de l'opération de soudage sans porter atteinte à la thermorégulation recherchée. La feuille principale unique constitue une pièce martyre perdue et consommable. Les inconvénients induits par ce caractère martyre sont négligeables, notamment au regard des coûts induits, la feuille principale constituant un élément dont la perte est négligeable. De plus, les pièces sont susceptibles de coller à cette feuille principale unique, qui étant consommable peut être maintenue en place sur les pièces pour protéger le cordon de soudure pendant des périodes de stockage et/ou de transport préalables à leur utilisation. Par ailleurs, la présence de la feuille principale unique confère au cordon de soudure obtenu un état de surface satisfaisant sur la face intérieure des pièces. Dans le cas d'une utilisation de dites cales, celles-ci sont aptes à être mises avantageusement à profit pour capter et dissiper la chaleur en provenance de la feuille principale unique avec laquelle elles sont en contact, et en conséquence permettent d'accroître la faculté offerte de régulation recherchée de la température dans la zone de soudure.

Dans le cadre du mode de réalisation prévoyant un logement, ce logement est susceptible d'être avantageusement ménagé à l'intérieur d'un châssis équipé de moyens de refroidissement. De tels moyens de refroidissement sont par exemple constitués de conduits disposés dans le châssis et acheminant un fluide caloporteur véhiculant des frigories. Les moyens de refroidissement sont notamment aptes à induire un échange thermique entre les calories de la feuille principale unique et les frigories acheminées par les moyens de refroidissement.

Il doit être compris que les deux variantes susvisées peuvent être mises en oeuvre isolément ou en combinaison, selon les besoins et au cas d'espèce. Une exploitation conjointe de ces deux variantes permet d'optimiser le captage de la chaleur induite par l'opération de soudage et la dissipation de cette chaleur par les feuilles secondaires et principale respectivement plaquées contre les faces supérieures et les faces inférieures des pièces.

Il est, conformément à la presente invention, proposé de former la feuille principale au moins à partir d'un matériau dont l'aspect extérieur est modifié selon l'élévation de température à laquelle il a été soumis. Il doit être compris que cette modification d'aspect extérieur varie selon le seuil de température atteint, et perdure après refroidissement de la feuille principale. Cette variation est par exemple une variation de couleur du matériau, obtenu avantageusement en formant la feuille principale à partir d'un matériau à base de cuivre, ou autre matériau métallique analogue susceptible d'offrir la dite modification d'aspect recherchée. Ces exemples avantageux sont donnés à titre indicatif et préférentiel, tout autre matériau présentant en combinaison la forte conductivité thermique et la modification d'aspect recherchées étant susceptible d'être exploité.

A partir de la modification d'aspect de la feuille principale, conformément à la presente invention, la vérification de la stabilité du maintien en température recherchée le long du cordon de soudure est facilement réalisable à l'oeil nu. Cette vérification est avantageusement obtenue sans mise en oeuvre des techniques complexes et/ou invasives, voire aléatoires, couramment utilisées dans le domaine.

Conformément à la presente invention, il est proposé de relever la couleur de ladite feuille principale unique en fin d'opération de soudage, pour contrôler la qualité de la soudure réalisée. La même opération peut être réalisée à l'aide des feuilles secondaires.

Par suite, la feuille principale peut être considérée comme un élément consommable et révélateur de la qualité de la soudure à partir de l'analyse de son changement de couleur, cette analyse étant effectuée une fois que la feuille principale est décollée et après la soudure.

La bonne réalisation de la soudure, dans sa fenêtre opératoire optimale et sécuritaire, est par exemple vérifiée par la présence d'au plus trois zones ayant des niveaux de teinte distincts chaque zone ayant des dimensions prédéterminées, à savoir:
- une première zone ayant premier niveau de teinte de couleur très sombre, à savoir proche du noir, au centre de la soudure et plus particulièrement centrée sur l'axe de la soudure,
- une deuxième zone répartie en deux bandes d'un niveau de teinte intermédiaire disposées de part et d'autre de la première zone, lesdites bandes délimitant la partie de feuille principale affectée thermiquement par la soudure,
- une troisième zone ayant un niveau de teinte correspondant à la couleur nominal de la feuille principale, c'est-à-dire à la couleur de la feuille principale avant la soudure.

La soudure est considérée comme acceptable si la largeur de chaque zone est constante, à une marge près de l'ordre de plus ou moins un millimètre, sur toute la longueur de la soudure. En effet, une irrégularité est à relier à une mauvaise définition des conditions de démarrage de la soudure ou encore à un problème de procédé lié par exemple à un défaut de position ou d'effort.

De plus, la première zone doit avantageusement avoir une largeur correspondant au diamètre du pion de soudage de l'outillage de soudure, en prenant toutefois en considération une marge égale par exemple à plus ou moins un millimètre. En effet, une largeur trop faible est à relier à un défaut de racine potentiel comme un manque de pénétration du pion de soudage et une largeur trop importante est à relier à une tendance à l'effondrement avec défaut géométrique extérieur associé ou à une surchauffe probable avec un risque de brûlure de l'alliage à souder.

L'épaisseur de la feuille principale choisie est susceptible d'être adaptée selon l'épaisseur des pièces à assembler et/ou selon le matériau dont sont issues ces pièces, notamment au regard des caractéristiques relatives à la conductivité thermique de ces matériaux, voire encore selon le matériau dont est issue la feuille principale. A titre indicatif, la feuille principale exploitée est d'une épaisseur comprise entre une dimension inférieure à l'épaisseur des pièces et une dimension de l'ordre du double de celle de l'épaisseur des pièces.

La présente invention va être décrite en relation avec les figures des planches annexées qui en illustrent des exemples de réalisation, dans lesquelles planches :
Les fig.1 à fig.3 sont des schémas successifs qui illustrent une méthode de soudage par friction non connut la présente invention.
Les fig.4 à fig.6 illustrent respectivement diverses variantes de réalisation d'un outillage pour la mise en oeuvre d'une méthode de soudage par friction de la présente invention.
La fig.7 est une illustration de pièces assemblées selon une méthode de la présente invention, mise en oeuvre à partir d'un outillage tel que ceux respectivement représentés sur les fig.4 à fig.6.

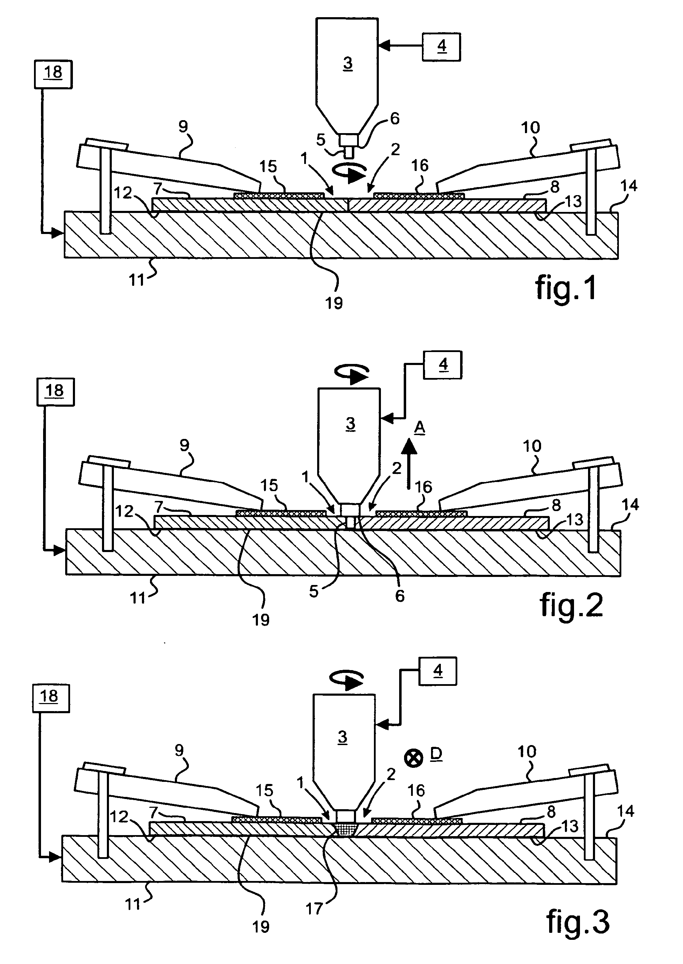

Sur les fig.1 à fig.3, une machine est organisée pour réaliser un assemblage entre deux pièces planes de faible épaisseur 1,2, de l'ordre du millimètre notamment. Cet assemblage est plus particulièrement réalisé à partir de la technique connue du soudage par friction. La machine comporte un mandrin 3 qui est entraîné en rotation par des premiers moyens moteurs 4, et qui est porteur d'un pion de soudage 5. Le mandrin 3 est muni d'un épaulement 6 à fonction de jauge de profondeur, l'opération de soudage s'effectuant en effort en raison du frottement induit par l'épaulement 6 contre la face supérieure 7,8 des pièces à assembler 1,2. La machine est équipée d'un jeu de brides 9,10, pour le plaquage des pièces 1,2 contre une enclume 11. Plus particulièrement, les brides 9,10 exercent un appui contre la face supérieure 7,8 de l'une et l'autre des pièces 1,2, qui prennent en réaction un appui antagoniste à leur face inférieure 12,13 contre une face de soutien 14 de l'enclume 11. Les pièces 1,2 sont maintenues plaquées contre l'enclume 11 en étant placées en adjacence, leur bord en regard étant mis en contact l'un contre l'autre.

Des feuilles secondaires 15,16 sont respectivement interposées entre les brides 9,10 et les pièces 1,2 correspondantes, de sorte qu'elles soient maintenues plaquées contre la face supérieure 7,8 des pièces 1,2. On comprendra que ces feuilles secondaires 15,16 s'étendent le long de la totalité des bords adjacents des pièces 1,2. Les feuilles secondaires 15,16 sont issues d'un matériau métallique de préférence à base de cuivre, qui présente l'avantage d'être un matériau apte à capter la chaleur induite par le frottement du pion de soudage 5 contre les pièces 1,2 lors de la formation du cordon de soudure 17, et à diffuser amplement cette chaleur captée dans le milieu ambiant. Ces dispositions visent à réduire et à réguler la température dans la zone de soudure dans laquelle le pion de soudage 5 est en cours de frottement contre les pièces 1,2. A titre indicatif mais non restrictif, une température satisfaisante de soudage pour des pièces d'une épaisseur de l'ordre du millimètre est d'environ 200°C. Le captage de la chaleur et sa diffusion hors de la zone de soudure par les feuilles secondaires 15,16 permet d'accroître les vitesses de production sans porter atteinte aux qualités requises du cordon de soudure 17 obtenu.

Plus particulièrement sur la fig.1, les pièces 1,2 sont installées sur l'enclume 11 et les feuilles secondaires 15,16 sont disposées au voisinage proche des bords adjacents des pièces 1,2. Chaque ensemble formé par une feuille secondaires 15,16 et une pièce 1,2 correspondantes est serré par les brides 9,10. Les premiers moyens moteurs 4 sont mis en oeuvre pour provoquer la rotation du mandrin 3.

De plus, une feuille principale 19 unique à forte conductivité thermique est maintenue plaquée contre la face inférieure 12,13 des pièces 1,2, en chevauchement de part et d'autre de leurs bords adjacents et donc contre l'emplacement du futur cordon de soudure.

Cette feuille principale 19 est disposée sur l'enclume 11 selon la réalisation schématisée sur les figures 1 à 3. On verra par la suite que selon une autre réalisation, la feuille principale 19 peut être disposée dans un logement de l'enclume 11.

Sur la fig.2, l'enclume 11 ou le mandrin 3 sont déplacés suivant un axe A correspondant à l'axe de gravité, pour amener le pion de soudage 5 et les pièces 1,2 l'un vers les autres. Ce déplacement perdure jusqu'à l'obtention d'une traversée des pièces 1,2 à leurs bords adjacents par le pion de soudage 5. Le cordon de soudure 17 est amorcé. Les déplacements éventuels de l'enclume 11 sont notamment réalisés par des deuxièmes moyens moteurs 18.

Le mandrin est de préférence équipé de capteurs aptes à mesurer les efforts de pression antagonistes entre le mandrin et les pièces à assembler dans la zone de soudure. A titre indicatif, de tels efforts de pression sont compris entre 1 KN (Kilo Newton) et 10 KN, et sont plus particulièrement de l'ordre de 5 KN.

Sur la fig.3, le pion de soudage ou les pièces sont déplacés l'un par rapport aux autres, provoquant une progression relative entre le pion de soudure et les bords adjacents des pièces 1,2, pour la formation du cordon de soudure 17. Ce déplacement est réalisé suivant l'une au moins des directions d'extension D du plan général des pièces 1,2. Suite à l'étape d'amorçage du cordon de soudure 17, une étape transitoire est susceptible d'être engagée pour apprécier la pertinence des vitesses de rotation du mandrin 3 et/ou du déplacement relatif entre le pion de soudage 5 et les pièces 1,2. L'étape transitoire étant achevée, la formation du cordon de soudure 17 se poursuit, jusqu'à sa finalisation en fin de course. Dans la zone de soudure, le frottement du pion de soudage 5 contre les pièces 1,2 induit une élévation de température provoquant une mise à l'état pâteux des pièces 1,2 et un épanchement de leur matière l'une vers l'autre. Le cordon de soudure 17 se forme à partir d'un mélange entre les matières issues de l'une et l'autre des pièces 1,2. Le maintien à l'état pâteux des pièces 1,2 est maintenu malgré leur faible épaisseur, à partir de la présence de la feuille principale 19 et des feuilles secondaires 15,16 optionnelles qui captent et qui diffusent la chaleur induite par le frottement du pion de soudage 5 contre les pièces 1,2. Au fur et à mesure de la progression relative du pion de soudage 5 le long des bords adjacents des pièces 1,2, la matière précédemment mise à l'état pâteux se recristallise. La présence de la feuille principale 19 et des feuilles secondaires 15,16 et la diffusion de la chaleur qu'elles captent et qu'elles diffusent favorisent cette recristallisation dans des conditions requises satisfaisantes. Une étape d'arrêt progressif du déplacement relatif entre le pion de soudage 5 et les pièces 1,2 est souhaitable, lors d'une étape de fin de course. Le cordon de soudure 17 étant achevé, le pion de soudage 5 est retiré hors des pièces 1,2 et la rotation du mandrin 3 est arrêtée. La recristallisation du cordon de soudure 17 s'achève progressivement à l'air ambiant.

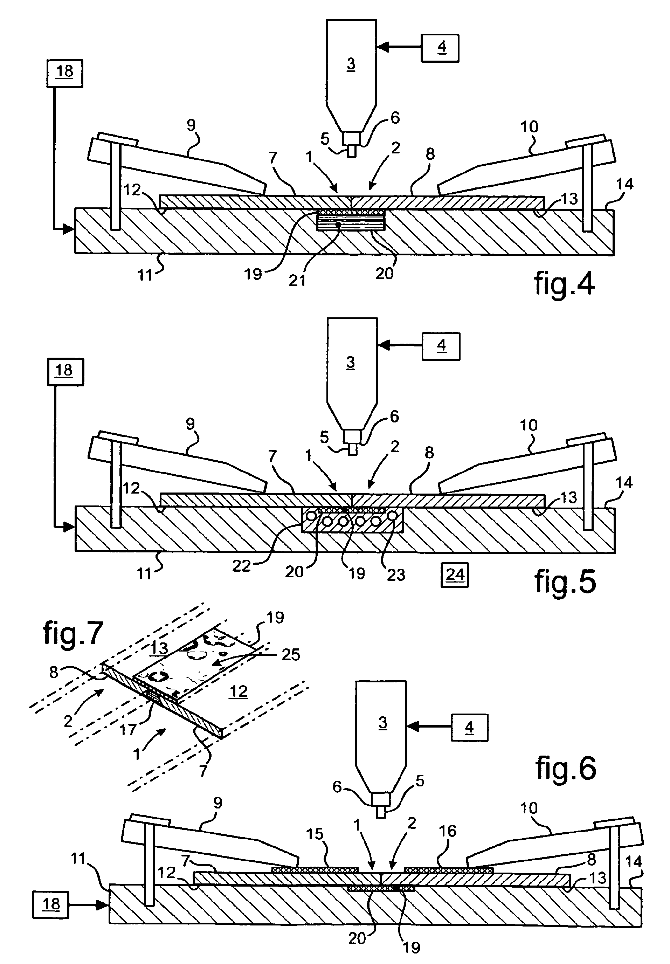

Sur les fig.4 et fig.5, les pièces 1,2 sont plaquées contre l'enclume 11 au moyen des brides 9,10 qui sont en contact direct avec la face supérieure 7,8 des pièces 1,2. Une feuille principale 19 unique à forte conductivité thermique est maintenue plaquée contre la face inférieure 12,13 des pièces 1,2, en chevauchement de part et d'autre de leurs bords adjacents. L'enclume 11 comporte un logement 20 pour recevoir la feuille principale unique 19, en étant positionnée de sorte que la feuille principale unique 19 et la face de soutien 14 de l'enclume 11 affleurent. Les dimensions du logement 20 suivant le plan de soutien correspondent à celles de la feuille principale unique 19, de sorte que l'installation de cette dernière sur l'enclume 11 soit rapide et aisée à effectuer.

L'épaisseur des feuille principale 19 et secondaire 15,16 est significativement inférieure à l'épaisseur des pièces 1,2. Cependant, l'épaisseur des pièces 1,2 est susceptible de varier d'une opération de soudage à l'autre, à titre indicatif cette épaisseur étant inférieure à 1.5 millimètres. Il est préféré d'utiliser des feuilles 15,16,19 d'épaisseur constante quelles que soient les épaisseurs des pièces 1,2 qui sont susceptibles d'être assemblées par la mise en oeuvre du procédé de l'invention. Cependant, il est accessoirement proposé des dispositions spécifiques tel qu'une feuille principale 19 à épaisseur variable en fonction de l'épaisseur des pièces 1,2.

Sur l'exemple de réalisation illustré sur la fig.4, la profondeur du logement 20 est supérieure à l'épaisseur de la feuille principale 19. Pour obtenir ledit affleurement, il est proposé d'interposer des cales 21 entre la feuille principale 19 et le fond du logement 20. Ces cales 21 sont d'une épaisseur adaptée, en étant choisies parmi un jeu de cales 21 d'épaisseur respectives.

Sur l'exemple de réalisation illustré sur la fig.5, le logement 20 est d'une profondeur équivalente à l'épaisseur de la feuille principale 19, pour l'obtention du dit affleurement. Dans ce cas, il est envisageable de ménager le logement 20 dans un châssis interchangeable 22 que reçoit l'enclume 11, ce châssis 22 participant d'un jeu de châssis comportant des logements 20 de profondeurs respectives.

Toujours sur la fig.5, un châssis, tel que le châssis 22 sur l'exemple de réalisation illustré, comporte le logement 20 qui reçoit la feuille principale 19. Ce châssis 22 est équipé de moyens de refroidissement 23, pour favoriser l'évacuation de la chaleur captée par la feuille principale 19. Sur l'exemple de réalisation illustré, les moyens de refroidissement 23 comprennent des canaux aptes à véhiculer un liquide caloporteur, porteur de frigories. Le châssis 22 est thermiquement conducteur et transmet par contact les frigories à la feuille principale 19. La température du liquide caloporteur est susceptible d'être déterminé selon l'opération de soudage à effectuer, et/ou d'être adaptée au cours de l'opération de soudage, en fonction de la température mesurée localement dans la zone de soudage par un capteur de température 24 ou organes analogues.

Sur la fig.6, les variantes de réalisation respectivement illustrées sur les fig.1 à fig.3 et sur les fig.4 et fig.5, sont associées pour optimiser la diffusion de la chaleur captée par les feuilles principale 19 et secondaires 15,16 plaquées contre les pièces 1,2. Plus particulièrement, des feuilles secondaires 15,16 sont respectivement affectées aux faces supérieures 7,8 des pièces 1,2, et une feuille principale 19 est affectée à la face inférieure 12,13 des pièces 1,2, en étant placée à l'intérieur d'un logement 20 que comporte l'enclume 11, et en étant disposée en chevauchement de part et d'autre des bords adjacents des pièces 1,2.

Sur la fig.7, l'assemblage des pièces 1,2 est effectué suivant l'une des méthodes illustrées sur les fig.4 à fig.6. Les pièces 1,2 sont assemblées l'une à l'autre par l'intermédiaire du cordon de soudure 17. La feuille principale 19 placée contre la face inférieure 12,13 des pièces 1,2 au cours de l'opération de soudage, est collée aux pièces 1,2 en raison de la température induite et de l'épanchement de la matière issue de l'une et l'autre des pièces 1,2. La feuille principale 19 est un élément martyr perdu, qui est susceptible d'être maintenu en place contre la face inférieure 12,13 des pièces 1,2 pendant leur stockage et/ou leur transport, préalablement à leur utilisation. Ce maintien de la feuille principale 19 permet de protéger le cordon de soudure 17 pendant ces périodes de stockage et/ou de transport.

Par ailleurs, les feuilles principale 19 et secondaires 15,16 utilisées par la méthode de la présente invention sont issues d'un matériau dont l'aspect 25 est modifié en fonction de la température à laquelle il a été soumis, tel que le cuivre. Cette modification d'aspect 25 permet, conformément à la présente invention, d'évaluer aisément à l'oeil nu la régularité et la valeur de la température à laquelle ont été soumises les feuilles principale 19 et secondaires 15,16 au cours de l'opération de soudage, et finalement permet d'évaluer, conformément à la presente invention, la qualité du cordon de soudure 17 obtenu sur la totalité de sa longueur.

## Revendications

1. Méthode de soudage par friction entre deux pièces (1,2) à assembler, cette méthode comprenant les opérations consistant à:
- plaquer individuellement en adjacence les pièces (1,2) à assembler contre une enclume (11), au moyen d'au moins un jeu de brides (9,10) appliquant individuellement un appui contre l'une ou l'autre des grandes faces des pièces (1,2), dite supérieures (7,8), de sorte que les pièces (1,2) prennent un appui antagoniste contre une face de soutien. (14) de l'enclume (11) à leur grande face opposée, dite inférieure (12,13),
- mettre en rotation un mandrin (3) muni d'un pion de soudage (5) et d'un épaulement (6), et provoquer un déplacement relatif entre le mandrin (3) et l'enclume (11) pour amener le pion de soudage (5) vers les grandes faces supérieures (7,8) des pièces (1,2) à assembler,
- appliquer le pion de soudage (5) conjointement à travers des bords adjacents des pièces (1,2) pour provoquer un échauffement par friction de la matière des pièces (1,2) dans la zone de soudure, jusqu'à induire un épanchement et un mélange de cette matière d'une pièce (1,2) à l'autre,
- provoquer un déplacement relatif en translation entre le mandrin (3) et l'enclume (11) suivant au moins une direction (D) correspondante à l'extension des bords adjacents des pièces (1,2) à assembler, jusqu'à obtention du cordon de soudure (17),
- induire une recristallisation de la matière formant le cordon de soudure (17) par refroidissement des pièces indifféremment à l'air ambiant ou techniquement assistée,
caractérisée en en ce qu'elle comprend l'opération consistant à maintenir plaquée une feuille principale unique (19) martyre contre le cordon de soudure et en chevauchement contre la face inférieure (12,13) de l'une et l'autre des pièces (1,2), ladite feuille principale (19) étant issue d'un matériau à forte conductivité thermique, cette feuille principale (19) étant apte à prélever par conduction la chaleur induite par la friction du mandrin contre les pièces (1,2) et à dissiper cette chaleur par conduction et par rayonnement et en ce qu'elle consiste à former la feuille principale (19) à partir d'un matériau dont l'aspect extérieur est modifié selon l'élévation de température à laquelle il a été soumis, la couleur de ladite feuille principale unique (19) étant relevée en fin d'opération de soudage pour contrôler la qualité de la soudure réalisée.

2. Méthode selon la revendication 1,
**caractérisée en ce qu'**elle consiste à affecter au moins une feuille secondaire (15,16) à chacune des pièces (1,2), et à maintenir cette feuille secondaire (15,16) plaquée contre la face supérieure (7,8) de la pièce (1,2) à laquelle elle est affectée.

3. Méthode selon la revendication 2,
**caractérisée en ce qu'**elle consiste à interposer les feuilles secondaires (15,16) entre au moins une bride (9,10) et la pièce (1,2) correspondante.

4. Méthode selon l'une quelconque des revendications précédentes,
**caractérisée en ce qu'**elle consiste à loger ladite feuille principale unique (19) dans un logement (20) que comporte l'enclume (11) et qui débouche à sa face de soutien (14), en faisant sensiblement affleurer la feuille principale (19) et la face de soutien (14) de l'enclume (11).

5. Méthode selon la revendication 4,
**caractérisée en ce qu'**elle consiste à ménager le logement (20) à l'intérieur d'un châssis (22) équipé de moyens de refroidissement (23), qui sont aptes à induire un échange thermique entre les calories de la feuille principale unique (19) et des frigories acheminées par les moyens de refroidissement (23).

6. Méthode selon la revendication 1,
**caractérisée en ce que** la bonne réalisation de la soudure est vérifiée par la présence d'au plus trois zones ayant des niveaux de teinte distincts, chaque zone ayant des dimensions prédéterminées.

7. Méthode selon la revendication 1,
**caractérisée, en ce qu'**elle consiste à former la feuille principale (19) à partir d'un matériau à base de cuivre.

8. Méthode selon l'une quelconque des revendications précédentes,
**caractérisée en ce qu'**elle consiste à exploiter une feuille principale (19) dont l'épaisseur est d'une dimension inférieure à l'épaisseur des pièces (1,2).

## Patentansprüche

1. Verfahren zum Schweißen durch Reibung zwischen zwei Teilen (1, 2), die zusammenzufügen sind, mit den Schritten bestehend aus:
- einzelnes aneinanderstoßendes Anpressen der zusammenzufügenden Teile (1, 2) gegen einen Amboss (11) mit mindestens einem Satz Spannriegeln (9, 10), die einzeln einen Druck gegen die eine oder die andere der großen Flächen, genannt die oberen Flächen (7, 8), der Teile (1, 2) anlegen, derart, dass die Teile (1, 2) auf ihrer gegenüberliegenden großen Seite, genannt untere Seite (12, 13), einen gegenseitigen Druck gegen eine Haltefläche (14) des Amboss (11) ausüben,
- Drehen einer Drehspindel (3), die mit einem Schweißstift (5) und einer Schulter (6) versehen ist, und Erzeugen einer Relativbewegung zwischen der Drehspindel (3) und dem Amboss (11), um den Schweißstift (5) auf die großen oberen Flächen (7, 8) der zusammenzufügenden Teile (1, 2) zu bewegen,
- Aufbringen des Schweißstiftes (5) gleichzeitig auf die benachbarten Ränder der Teile (1, 2), um eine Erhitzung durch Reibung des Materials der Teile (1, 2) in dem Schweißbereich zu erzeugen, bis es zu einem Erguss und einer Mischung dieses Materials des einen Teils (1, 2) mit dem Material des anderen Teils kommt,
- Bewirken einer Translations-Relativbewegung zwischen der Drehspindel (3) und dem Amboss (11) entlang mindestens einer Richtung (D), die der Erstreckung der aneinander angrenzenden Ränder der zusammenzufügenden Teile (1, 2) entspricht, bis eine Schweißnaht (17) erhalten wird,
- Induzieren einer Rekristallisation des die Schweißnaht (17) bildenden Materials durch Abkühlung der Teile, gleichgültig, ob an der Umgebungsluft oder technisch unterstützt, **dadurch gekennzeichnet, dass** das Verfahren den Schritt aufweist, der darin besteht, ein einzelnes Hauptopferblech gegen die Schweißnaht anzupressen, welches mit den unteren Flächen (12, 13) des einen und des anderen Teils (1, 2) überlappt, wobei das Hauptblech (19) aus einem Material mit hoher thermischer Leitfähigkeit hergestellt ist, wobei dieses Hauptblech (19) in der Lage ist, durch Wärmeleitung die durch die Reibung der Drehspindel gegen die Teile (1, 2) erzeugte Wärme abzuführen und diese Wärme durch Wärmeleitung und durch Wärmestrahlung zu verteilen, und dadurch, dass der Schritt darin besteht, ein Hauptblech (19) ausgehend von einem Material herzustellen, dessen äußere Erscheinung sich während eines Temperaturanstiegs, dem das Blech ausgesetzt ist, ändert, wobei die Farbe dieses einzelnen Hauptblechs (19) am Ende des Schweißvorgangs erfasst wird, um die Qualität der durchgeführten Schweißung zu kontrollieren.

2. Verfahren nach Anspruch 1,
**dadurch gekennzeichnet, dass** es darin besteht, jedem der Teile (1, 2) mindestens ein Sekundärblech (15, 16) zuzuordnen und dieses Sekundärblech (15, 16) gegen die obere Fläche (7, 8) des Teils (1, 2), dem es zugeordnet ist, angepresst zu halten.

3. Verfahren nach Anspruch 2,
**dadurch gekennzeichnet, dass** es darin besteht, die Sekundärbleche (15, 16) zwischen mindestens einem Spannriegel (9, 10) und dem zugehörigen Teil (1, 2) anzuordnen.

4. Verfahren nach einem der vorstehenden Ansprüche,
**dadurch gekennzeichnet, dass** es darin besteht, das einzelne Hauptblech (19) in einem Lager (20), welches der Amboss (11) auf weist, anzuordnen, das auf seiner Haltefläche (14) mündet, wobei das Hauptblech (19) im Wesentlichen mit der Haltefläche (14) des Amboss (11) fluchtet.

5. Verfahren nach Anspruch 4,
**dadurch gekennzeichnet, dass** es darin besteht, das Lager (20) im Inneren eines Gehäuses (22) auszubilden, welches mit Kühlmitteln (23) ausgerüstet ist, die einen Wärmetausch zwischen der Wärme des einzelnen Hauptblechs (19) und der durch die Kühlmittel (23) zugeführten Kälte bewirken.

6. Verfahren nach Anspruch 1,
**dadurch gekennzeichnet, dass** die gute Ausführung der Schweißung überprüft wird durch die Anwesenheit von maximal drei Bereichen mit unterschiedlicher Färbung, wobei jeder Bereich vorbestimmte Ausmaße aufweist.

7. Verfahren nach Anspruch 1,
**dadurch gekennzeichnet, dass** es darin besteht, das Hauptblech (19) ausgehend von einem Material auf Kupferbasis herzustellen.

8. Verfahren nach einem der vorstehenden Ansprüche,
**dadurch gekennzeichnet, dass** es darin besteht, ein Hauptblech (19) zu verwenden, dessen Dicke eine Größenordnung kleiner ist als die Dicke der Teile (1, 2).

## Claims

1. Method for friction welding two parts (1,2) to be joined, said method comprising the operations consisting in:
- pressing the parts (1,2) to be joined, individually and adjacent to each other, against an anvil (11) by means of at least one set of clamps (9,10) which press individually against one or other of the large faces of the parts (1,2), called the top faces (7,8), such that the parts (1,2) bear with a counterforce against a support face (14) of the anvil (11) at their opposite large face, called the bottom face (12,13),
- setting into rotation a mandrel (3) provided with a welding pin (5) and with a shoulder (6), and causing the mandrel (3) and the anvil (11) to move relative to each other so as to bring the welding pin (5) towards the top large faces (7,8) of the parts (1,2) to be joined,
- pressing the welding pin (5) through both adjacent edges of the parts (1,2) to cause the material of the parts (1,2) to be heated by friction in the weld zone until said material is induced to spread and mix from one part (1,2) to the other,
- causing the mandrel (3) and the anvil (11) to move in relative translation in at least one direction (D) corresponding to the direction in which the adjacent edges of the parts (1,2) to be joined extend, until a weld bead (17) is obtained,
- inducing recrystallisation of the material forming the weld bead (17) by cooling the parts, equally well in ambient air or in a technically assisted manner,
**characterised in that** it comprises the operation consisting in keeping a sacrificial single main sheet (19) pressed against the weld bead and overlapping the bottom face (12,13) of each of the parts (1,2), said main sheet (19) being made of a material having high thermal conductivity, said main sheet (19) being suitable for removing by conduction the heat induced by the friction of the mandrel against the parts (1,2) and for dissipating said heat by conduction and by radiation, and **in that** it consists in forming the main sheet (19) from a material whose external appearance is modified according to the temperature rise to which it has been subjected, the colour of said single main sheet (19) being observed at the end of the welding operation in order to check the quality of the weld produced.

2. Method according to Claim 1,
**characterised in that** it consists in allocating at least one secondary sheet (15,16) to each of the parts (1,2) and in keeping said secondary sheet (15,16) pressed against the top face (7,8) of the part (1,2) to which it is allocated.

3. Method according to Claim 2,
**characterised in that** it consists in interposing the secondary sheets (15,16) between at least one clamp (9,10) and the corresponding part (1,2).

4. Method according to any one of the preceding claims,
**characterised in that** it consists in housing said single main sheet (19) in a housing (20) included in the anvil (11) and opening out into its support face (14), while ensuring that the main sheet (19) is substantially flush with the support face (14) of the anvil (11).

5. Method according to Claim 4,
**characterised in that** it consists in providing the housing (20) inside a frame (22) fitted with cooling means (23) that are suitable for inducing a heat exchange between heat of the single main sheet (19) and the cooling medium conveyed by the cooling means (23).

6. Method according to Claim 1,
**characterised in that** the production of a good weld is ascertained by the presence of at most three zones having distinct colour levels, each zone having predetermined dimensions.

7. Method according to Claim 1,
**characterised in that** it consists in forming the main sheet (19) from a material that is based on copper.

8. Method according to any one of the preceding claims,
**characterised in that** it consists in using a main sheet (19), the thickness of which is of a dimension that is less than the thickness of the parts (1,2).
